(19) Europäisches Patentamt
European Patent Office
Office européen des brevets

(11) Numéro de publication : 0 303 533 B1

(12) # FASCICULE DE BREVET EUROPEEN

(45) Date de publication du fascicule du brevet : **03.07.91 Bulletin 91/27**

(51) Int. Cl.$^5$ : **C03B 37/018**

(21) Numéro de dépôt : **88402060.3**

(22) Date de dépôt : **08.08.88**

(54) **Procédé pour recouvrir une surface de grande longueur d'une couche uniforme de particules.**

(30) Priorité : **12.08.87 FR 8711473**

(43) Date de publication de la demande : **15.02.89 Bulletin 89/07**

(45) Mention de la délivrance du brevet : **03.07.91 Bulletin 91/27**

(84) Etats contractants désignés : **DE GB IT NL**

(56) Documents cités :
**EP-A- 0 140 113**
**WO-A-83/03600**
**FR-A- 2 584 101**
**GB-A- 1 559 768**

(73) Titulaire : **COMMISSARIAT A L'ENERGIE ATOMIQUE Etablissement de Caractère Scientifique Technique et Industriel**
**31/33, rue de la Fédération**
**F-75015 Paris (FR)**

(72) Inventeur : **Lambard, Jacques**
**72, rue de Chalais**
**FR-94240 L'Hay-les-Roses (FR)**

(74) Mandataire : **Mongrédien, André et al**
**c/o BREVATOME 25, rue de Ponthieu**
**F-75008 Paris (FR)**

EP 0 303 533 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention se rapporte à un procédé pour recouvrir une surface de grande longueur d'une couche uniforme de particules, l'expression "de grande longueur" étant employée pour désigner une surface ayant une autre dimension (largeur ou périmètre) beaucoup plus petite mais sans préjuger de l'importance de cette longueur.

Depuis quelques années, les procédés pour recouvrir des surfaces au moyen d'un dépôt de particules primitivement véhiculées en aérosol par un gaz porteur suscitent un grand intérêt, principalement pour l'élaboration de préformes de fibres optiques.

On tend à distinguer deux grands groupes de méthodes : dans le dépôt de type physique, les particules sont introduites telles quelles dans le gaz porteur, après quoi l'aérosol peut être dirigé ou projeté vers la surface à recouvrir ; dans les dépôts chimiques, le mélange de deux gaz que l'on chauffe entraîne une réaction de dismutation qui produit une précipitation de particules solides sur la surface. Le procédé objet de la présente invention peut s'appliquer indifféremment à ces deux types.

Un problème important, notamment dans le cas de préformes de fibres optiques, est d'assurer une épaisseur uniforme de la couche formée par le dépôt de ces particules. Quoique de nombreux articles scientifiques aient été publiés, rares sont ceux qui suggèrent une solution. On peut cependant citer une demande de brevet européen (EP-A1-0140113) qui utilise les forces de thermophorèse.

Le phénomène de thermophorèse, que l'on peut facilement comprendre à l'aide du brevet US-A-4263032 prédécesseur du brevet européen précité, peut être défini comme l'attirance de particules chauffées par une paroi froide. Dans le brevet américain, on crée un échauffement ponctuel à la surface d'un tube canalisant le courant d'aérosol et sur la paroi interne duquel on veut réaliser le dépôt de particules. Les particules se déposent préférentiellement immédiatement en aval du point échauffé. Pour réaliser un dépôt uniforme, il convient donc de répartir l'échauffement suivant le temps en soumettant le tube ou la flamme à des déplacements réguliers de rotation et de translation. Le dispositif utilisé s'en trouve compliqué.

D'après le brevet européen, on essaie d'obtenir directement un dépôt uniforme en créant un échauffement du tube qui soit de moins en moins intense vers l'aval du courant d'aérosol. La loi mathématique que l'on donne et qui définit le gradient de température à appliquer est malheureusement de type exponentiel, ce qui signifie que les températures devront être très élevées en amont. L'exemple que l'on donne utilise des vapeurs portées à une température supérieure à 1400°C. Il n'est pas possible de la transposer tel quel au dépôt de particules à bas point de vitrification.

Outre cet inconvénient, la thermophorèse repose sur un déséquilibre thermique entre le gaz et la paroi. Il est probablement facile de contrôler et maintenir ce déséquilibre s'il se produit dans un faible volume comme c'est le cas dans le brevet américain ; par contre, c'est certainement beaucoup plus difficile s'il faut le supposer dans tout l'intérieur d'un tube éventuellement assez long. On peut donc craindre que la mise en oeuvre de l'invention décrite dans ce brevet européen ne soit difficile.

La présente invention ne fait donc pas appel aux forces de thermophorèse pour obtenir le même résultat. Elle consiste en un procédé pour recouvrir une surface par une couche uniforme de particules au moyen d'un échauffement progressif de l'aérosol contenant les particules au cours de sa circulation le long de cette surface. Un gradient thermique le long de la surface est donc également créé, mais qui est de signe opposé à celui revendiqué dans le brevet européen. De plus, la surface à recouvrir et l'aérosol sont portés à la même température : le dépôt est dû uniquement au mouvement brownien des particules, la propension des particules à se déposer étant augmentée par une agitation plus grande consécutive à un échauffement. Comme le montre la formule mathématique donnée pour un tube cylindrique, qui est de type logarithmique, le phénomène est complètement différent de celui de la thermophorèse.

Plus précisément, l'invention concerne un procédé pour recouvrir une surface de grande longueur d'une couche uniforme de particules, consistant à créer un aérosol contenant les particules en suspension, à établir une circulation de l'aérosol en un écoulement laminaire suivant la longueur de la surface, caractérisé en ce que l'aérosol est progressivement échauffé au cours de sa circulation.

Dans le cas où la surface à recouvrir conserve un périmètre de valeur constante sur sa longueur, l'aérosol est progressivement échauffé suivant la formule :

$$T(Z) = T(0)\left( \frac{\ln\ (1-Fd.Z)}{Fd.Z} \right)^2$$

où Z désigne l'abscisse normalisée suivant la longueur de la surface (Z = 0 à une extrémité de la surface sur laquelle débute la circulation, Z = 1 à une extrémité de la surface sur laquelle s'achève la circulation), T(Z) la température de l'aérosol à l'abscisse Z, T(0) la température de l'aérosol à l'abscisse Z = 0, et Fd la fraction des particules de l'aérosol prévue pour recouvrir la surface au cours de la circulation.

Une application importante de ce procédé est la fabrication de préforme pour fibres optiques.

Plusieurs exemples d'application du procédé selon l'invention vont être décrits après avoir commenté la figure unique qui représente l'installation mise en oeuvre pour la réalisation du procédé.

On décrit tout d'abord les constituants utilisés pour la production de l'aérosol. Le gaz porteur est extrait d'une bouteille de gaz 1 et circule le long d'une canalisation d'approvisionnement 2 sur laquelle sont installés successivement, d'amont en aval, une première vanne de réglage 3, un débitmètre 4, un générateur de particules 5 et une vanne d'isolation 16. La canalisation d'approvisionnement 2 débouche finalement dans un conduit 6 débouchant lui-même à son autre extrémité dans une canalisation d'échappement 7 munie d'une deuxième vanne de réglage 8. Un système de pompage 9 se trouve en aval de la canalisation d'échappement 7 et assure une circulation forcée du gaz à partir de la bouteille 1. Le conduit 6 est relié à la canalisation d'approvisionnement 2 par un raccord amont 10 et à la canalisation d'échappement 7 par un raccord aval 11.

Dans cet exemple, on suppose que c'est la paroi interne du conduit 6 qu'il faut recouvrir du dépôt de particules. L'invention pourrait toutefois être employée pour recouvrir par exemple la surface d'un profilé plein, qu'il faudrait alors disposer à l'intérieur du conduit 6 à l'aide d'un moyen de centrage approprié. Dans tous les cas, le conduit 6 est entouré sur toute sa longueur par un système de chauffage 12 composé d'un certain nombre de modules de four 13 que l'on commande par une alimentation électrique 14 qui permet un réglage indépendant de leur température. Les modules de four 13, pourvus de thermomètres non représentés, sont empilés suivant la longueur du conduit 6 et d'épaisseur égale ou inférieure aux dimensions transversales dudit conduit. Leur chauffage se fait par une résistance électrique. Un élément de refroidissement 15 est disposé en amont du système de chauffage 12 autour du conduit 6. Il se compose d'un enroulement parcouru par un fluide ayant un débit suffisant ; il permet de régler la température de l'aérosol à l'entrée du conduit 6.

Le système fluide est complété par un bipasse 20 constitué d'une conduite débouchant en amont dans la canalisation d'approvisionnement 2 entre le générateur de particules 5 et la vanne d'isolation 16 et en aval dans la canalisation d'échappement 7 entre le système de pompage 9 et la deuxième vanne de réglage 8. Elle est pourvue d'un manomètre 21 près de la canalisation d'approvisionnement 2 et d'une vanne de bipasse 22 plus en aval.

Un appareil de comptage de particules 23 est prévu ; il est alimenté par l'aérosol circulant dans le bipasse 20 par l'intermédiaire d'un conduit de bipasse 24 bifurquant du bipasse 20 entre le manomètre 21 et la vanne de bipasse 22, ainsi que par un conduit d'aérosol usé 25 bifurquant de la canalisation d'échappement 7 entre le raccord aval 11 et la deuxième vanne de réglage 8. Un conduit d'évacuation 26, qui débouche dans le bipasse 20 en aval de la vanne de bipasse 22, permet de ventiler l'appareil de comptage 23 de l'aérosol qui y a pénétré par les deux autres conduits 24 et 25. L'appareil de comptage 23 peut déterminer la granulométrie des particules grâce à une batterie de diffusion et la concentration des particules dans l'aérosol grâce à un compteur de noyaux de condensation.

Un système de mesure de l'épaisseur du dépôt réalisé est également prévu. Il comprend un curseur 30 se déplaçant le long d'un rail 31 parallèle au conduit 6 et auquel est suspendu un appareil de mesure proprement dit 32 terminé par une sonde 33 s'étendant à travers les modules de fours 13, interrompus à cet endroit, jusqu'à la paroi extérieure du conduit 6 dont elle peut mesurer l'épaisseur par un procédé non destructif : la sonde 33 peut ainsi être composée d'un quartz piézoélectrique. Le mouvement du curseur 30 sur le rail 31 promène ainsi la sonde 33 sur le conduit 6.

Un micro-ordinateur de commande 34 peut avantageusement être prévu. Dans la réalisation décrite ici, il permet de recueillir les informations du débitmètre 4, du manomètre 21, de l'appareil de mesure 32 et de l'appareil de comptage 23, ainsi que de commander le générateur de particules 5, le curseur 30, l'alimentation électrique 14 et la deuxième vanne de réglage 8.

Avant de décrire le fonctionnement de cet appareil, on va s'étendre quelque peu sur les phénomènes physiques à l'origine du dépôt de particules.

Dans un milieu gazeux calme contenant les particules en suspension, on peut démontrer que le nombre de particules précipitées sur la paroi par unité de surface est

$$N(t) = 2N_0\sqrt{\mathcal{D}\,t/\pi} \quad (1)$$

où $N_0$ est la concentration moléculaire des particules, t est le temps et $\mathcal{D}$ est le coefficient de diffusion calculable par la formule de Maxwell-Chapman :

$$\mathcal{D} = \frac{3}{2(n_1 + n_2)} \, \frac{1}{(\sigma_1 + \sigma_2)^2} \sqrt{\frac{kT}{2\pi}} \sqrt{\frac{m_1 + m_2}{m_1 \cdot m_2}} \quad (2)$$

où n est la concentration, σ le diamètre, m la masse moléculaire, k la constante de Boltzmann, et T la température, 1 et 2 désignant le gaz porteur et les particules en suspension.

Les formules (1) et (2) montrent que le dépôt de particules sur une paroi sera favorisé si elles sont de faible diamètre (dans la pratique, la borne supérieure sera de l'ordre de grandeur d'un micromètre), si la température est élevée, si la concentration moléculaire du gaz porteur, toujours beaucoup plus importante que celle de l'aérosol, est faible, c'est-à-dire si la pression est faible, et enfin si les masses moléculaires des particules sont importantes par rapport à celles des molécules du gaz porteur.

La nécessité d'avoir des particules de faible diamètre est d'autant plus nette qu'il convient de minimiser autant que possible les forces dues à la gravité par rapport à celles dues au mouvement brownien. Dans le cas du procédé objet de l'invention, il faut appliquer les formules connues valables pour des nombres de Knudsen largement supérieurs à l'unité.

Dans le cas d'un courant d'aérosol circulant, la situation est un peu différente puisque l'aérosol s'appauvrit petit à petit en particules au fur et à mesure que celles-ci se déposent sur les parties amont du conduit 6. Il est donc nécessaire, par un échauffement progressif de l'aérosol, de favoriser la propension des particules subsistantes à se déposer en accroissant leur mouvement brownien. On peut ainsi réaliser une couche uniforme de particules sur toute la longueur du conduit 6. Dans un cas général où la forme de la surface à recouvrir est variable suivant le sens de circulation de l'aérosol, l'ajustement des températures doit être expérimental. La formule théorique donne, pour une conduite sans variations brusques de forme ou de longueur du périmètre:

$$T(z) = T(0)\left(\frac{Q_0 N_0}{N_S p_0 z}\right)^2 \left[\ln\left(1 - \frac{N_S \int_0^z p(x)dx}{Q_0 N_0}\right)\right]^2$$

où z désigne l'abscisse dans le conduit,
$Q_0$ le débit volumique gazeux à l'entrée du conduit,
T(z) la température du gaz et du conduit à l'abscisse z,
T(0) la température du gaz et du conduit à l'entrée du conduit,
$N_0$ la concentration de particules à l'entrée du conduit,
$N_S$le nombre de particules déposées par unité de surface et de temps,
p(x) le périmètre du conduit à l'abscisse x,
$p_0$ le périmètre du conduit à son entrée.

Elle peut donc être calculée pour chaque cas particulier. Dans le cas d'une surface de périmètre invariant dans le sens de circulation de l'aérosol, et notamment d'une surface cylindrique de révolution ou non, la répartition du profil des températures peut être résumée par la formule :

$$T(Z) = T(0).\left(\frac{\ln(1-Fd.Z)}{Fd.Z}\right)^2 \quad (3)$$

où Z représente l'abscisse normalisée le long de la surface à recouvrir (Z = 0 à l'entrée de l'aérosol sur la surface, Z = 1 à la sortie de l'aérosol de la surface), Fd est la fraction des particules de l'aérosol qui recouvre la surface au cours de la circulation, T(Z) désigne la température à laquelle doit être portée l'aérosol à l'abscisse Z, et donc T(0) désigne la température à l'entrée de la surface, réglée ici par l'élément de refroidissement 15.

Cette formule est logarithmique, ce qui signifie que, contrairement à ce qui se passe dans le cas de la thermophorèse, les gradients de température à établir restent modérés et ne nécessitent donc pas des moyens de chauffage importants.

On revient maintenant à la description du fonctionnement de l'appareil décrit sur la figure. Le micro-ordinateur 34 dans le cas où la surface à recouvrir est cylindrique, règle l'alimentation électrique 14 pour porter les modules de fours 13 à des températures permettant d'obtenir un profil thermique conforme à la formule 3. Si la surface à recouvrir n'est pas cylindrique, un profil thermique initial plus ou moins arbitraire est introduit. On ouvre la première vanne de réglage 3 et la vanne de bipasse 22, la vanne d'isolation 16 et la deuxième vanne de réglage 8 restant fermées. Le micro-ordinateur 34 note le débit et la pression du gaz porteur à l'aide du débitmètre 4 et du manomètre 21. Il règle alors le débit du générateur de particules 5 de manière à créer un aérosol possédant la concentration souhaitée en particules. L'ajustement est ensuite automatique en fonction des fluctuations de débit et de pression de gaz porteur.

On ouvre ensuite la vanne d'isolation 16 et on ferme la vanne de bipasse 22. L'aérosol circule en direction de l'appareil de comptage 23 et passe à la fois par le bipasse 20 et le conduit de bipasse 24, et par le conduit 6 et le conduit d'aérosol usé 25. Il est ainsi possible de vérifier les concentrations relatives de particules dans l'aérosol usé ayant traversé le conduit 6 et dont les particules se sont partiellement déposées dedans, et dans l'aérosol engendré à l'aide du générateur de particules 5, c'est-à-dire de mesurer la grandeur Fd. Si elle s'écarte des prévisions, le micro-ordinateur 34 ajuste les températures des modules de four 13 de façon à les ramener à un profil thermique compatible avec la formule 3. La deuxième vanne de réglage 8 est ensuite ouverte ; l'aérosol passe à peu près entièrement par le conduit 6 dans lequel il se dépose. La deuxième vanne de réglage 8 peut être plus ou moins ouverte pour corriger les fluctuations de pression de gaz porteur. Au cours du dépôt, le curseur 30 se déplace sur le rail 31 et la sonde 33 mesure continûment l'accroissement de l'épaisseur du conduit 6 dans le cas où les particules se déposent sur la paroi interne de celui-ci (dans le cas où l'on s'intéresse au dépôt sur un profilé se trouvant à l'intérieur du conduit 6, cette méthode n'est pas modifiée car l'épaisseur déposée est identique à celle déposée sur la paroi interne du conduit 6 à la même abscisse).

Si l'épaisseur de la couche déposée n'est pas uniforme, le micro-ordinateur 34 ajuste de nouveau les températures des modules de fours 13. Il est évidemment possible d'effectuer également périodiquement des mesures de débit et de pression de gaz porteur ainsi que d'utiliser la fraction d'aérosol qui passe par les conduits 24 et 25 de bipasse et d'aérosol usé pour remettre à jour la mesure de la fraction Fd. Le micro-ordinateur 34 procède ensuite éventuellement aux corrections nécessaires.

L'opération de dépôt dure jusqu'à ce qu'on ferme la vanne d'isolation 16 avant d'arrêter le reste de l'installation puis d'ôter le conduit 6 en démontant les raccords amont et aval 10 et 11.

Le processus décrit peut être sensiblement simplifié dans de nombreux cas par suite de l'omission de certains appareils. C'est ainsi qu'on peut se passer, notamment pour une opération de production, de la sonde 33 et des pièces annexes utilisées pour la mesure d'épaisseur, de l'appareil de comptage 23 et du bipasse 20, et du micro-ordinateur 34. Les réglages sont alors manuels et aucun ajustement n'est effectué pendant la circulation de l'aérosol, dont la composition est établie expérimentalement dans une étape préliminaire.

Les paramètres de l'écoulement peuvent être déterminés comme suit. La concentration des particules $N_0$ l'entrée du conduit dépend de leur taille, connue a priori par les caractéristiques du générateur 5, de la pression et du débit du gaz, et de la consommation de matière pour engendrer les particules.

La fraction massique Fd déposée peut être déterminée théoriquement ou expérimentalement. Le profil thermique peut être déterminé par des essais préliminaires sur des éprouvettes à l'aide éventuellement de contrôles non destructifs ou destructifs.

Plusieurs expériences concrètes ont été menées avec cet appareil, et on va maintenant les résumer.

On a ainsi réalisé un dépôt de nickel sur la surface interne d'un profilé en forme de U de 3 cm de largeur et 0,6 cm de hauteur. Cette surface a été recouverte par une plaque de 3 cm de large de manière à obtenir un

conduit rectangulaire. Sa longueur était de 40 cm. Le générateur de particules de nickel était un évaporateur chauffé par effet Joule et le gaz porteur était de l'azote et de l'hydrogène dans le rapport 9/1 à la pression de 1000 pascals ; les particules de nickel avaient environ 30 nm de diamètre. Fd était égale à environ 0,5, la température initiale T(0) était de 30°C, la température T(1) était d'environ 300°C à la sortie. Le débit d'aérosol était de l'ordre de 65 $cm^3$ par seconde. Le profil de température entre l'entrée et la sortie fut évidemment conforme à la formule (3), et un accroissement uniforme de l'épaisseur du tube de l'ordre de 0,1 micromètre par heure fut observé.

On a également réalisé des préformes pour fibres optiques en recouvrant la surface interne d'un tube de silice. L'aérosol comprenant comme gaz porteur de l'hélium et de l'oxygène en pourcentages molaires 95-5 sous une pression de 400Pa et comme particules des oxydes de silicium et de germanium $SiO_2$ et $GeO_2$ obtenus par l'oxydation des halogénures métalliques $SiCl_4$ et $GeCl_4$. Le diamètre des particules avoisinait 100 nm. Fd était égale à 0,7 et les températures à l'entrée et à la sortie étaient respectivement 30 et 650°C. Le débit était de 1,2 $cm^3$/sec. et le tube avait une longueur de 20 cm pour des diamètres externe et interne de 7 et 5 mm respectivement. Pour un profil de températures conforme à la formule (3), un accroissement d'épaisseur uniforme de 0,5 micromètre par heure fut observé.

Dans une expérience analogue, on a fait varier dans le temps les proportions de $SiCl_4$ et $GeCl_4$ de manière à obtenir des préformes ayant un indice de réfraction différent suivant l'épaisseur de la couche. La modification a alors été progressive. Il est également possible d'obtenir des produits recouverts de plusieurs couches bien délimitées. Par exemple, on a réalisé également une préforme de verre fluoroaluminate. Une couche de particules de $PbF_2$ et d'$AlF_3$ dans les proportions molaires 45-55 a été déposée dans l'intérieur d'un tube de verre de borosilicate, puis une couche des mêmes particules en proportions molaires 60-40 par réaction en phase gazeuse des composés $Pb(CH_3)_4$, $Al(CH_3)_4$ et $F_2$. On a ainsi créé une préforme à saut d'indice de réfraction.

Les couches obtenues à l'aide du procédé peuvent être ensuite soumises à des traitements thermiques classiques pour obtenir le frittage ou la vitrification de la couche.

Il est intéressant de noter que, par rapport aux procédés usuels utilisant la thermophorèse et dont le contenu du brevet américain mentionné plus haut est un exemple, il est ici beaucoup plus facile d'obtenir des caractéristiques uniformes sur toute la surface à recouvrir. Le dépôt est en effet effectué simultanément sur toute cette surface, alors que dans ce brevet le dépôt ne concerne qu'une petite partie de la surface à la fois, ce qui veut dire qu'il faut prendre des précautions particulières pour conserver les caractéristiques de la production de l'aérosol.

Ces déplacements doivent être renouvelés pour chaque couche distincte. Il est évidemment difficile en pratique d'obtenir ainsi une couche mince dont la composition varie de façon uniforme suivant l'épaisseur.

On peut donc constater que le procédé objet de l'invention présente plusieurs avantages, en particulier quand il est automatisé à l'aide d'un appareil tel que celui décrit. Il peut être appliqué à des cas très nombreux; il est évidemment nécessaire que la surface à recouvrir ait une grande dimension longitudinale par rapport à ses dimensions transversales, et il faut encore ajouter que l'écoulement d'aérosol que l'on réalise doit être laminaire. Les facteurs favorables mais non indispensables sont une faible pression et des particules constituées d'atomes lourds par rapport à ceux du gaz porteur, de petit diamètre et à faible dispersion statistique.

## Revendications

1. Procédé pour recouvrir une surface de grande longueur (6) d'une couche uniforme de particules, consistant à créer un aérosol contenant les particules en suspension, à établir une circulation de l'aérosol en un écoulement laminaire suivant la longueur de la surface, caractérisé en ce que l'aérosol est progressivement échauffé au cours de sa circulation.

2. Procédé pour recouvrir une surface de grande longueur d'une couche uniforme de particules selon la revendication 1, dans lequel la surface à recouvrir conserve un périmètre de valeur constante sur sa longueur, et l'aérosol est progressivement échauffé suivant la formule :

$$T(Z) = T(0).\left(\frac{Ln(1-Fd.Z)}{Fd.Z}\right)^2 \quad (3)$$

où Z désigne l'abscisse normalisée suivant la longueur de la surface (Z = 0 à une extrémité de la surface sur laquelle débute la circulation, Z = 1 à une extrémité de la surface sur laquelle s'achève la circulation), T(Z) la température de l'aérosol à l'abscisse Z, T(0) la température de l'aérosol à l'abscisse Z = 0, et Fd la fraction des particules de l'aérosol prévue pour recouvrir la surface au cours de la circulation.

3. Application du procédé selon la revendication 2, caractérisé en ce que la surface appartient à une préforme de fibre optique.

## Claims

1. Process for covering a surface of great length (6) with a uniform layer of particles, consisting in creating an aerosol containing the particles in suspension, in establishing a circulation of the aerosol in a laminar flow along the length of the surface, characterised in that the aerosol is progressively heated during its circulation.

2. Process for covering a surface of great length with a uniform layer of particles according to Claim 1, in which the surface to be covered maintains a perimeter of constant value over its length and that the aerosol is progressively heated according to the formula :

$$T(Z) = T(0).\left(\frac{\ln(1-Fd.Z)}{Fd.Z}\right)^2 \qquad (3)$$

where Z denotes the normalised abscissa along the length of the surface (Z = 0 at an end of the surface at which the circulation begins, Z = 1 at an end of the surface at which the circulation ends), T(Z) the temperature of the aerosol at the abscissa Z, T(0) the temperature of the aerosol at the abscissa Z = 0, and Fd the fraction of the aerosol particles intended to cover the surface during the circulation.

3. Application of the process according to Claim 2, characterised in that the surface belongs to an optical fibre preform.

## Ansprüche

1. Verfahren zum Bedecken einer langen Oberfläche mit einer gleichmäßigen Schicht von Partikeln, das darin besteht, ein Aerosol zu bilden, das die Partikel in Lösung enthält, eine Zirkulation des Aerosols durch laminares Strömen entlang der Länge der Oberfläche zu erzeugen, dadurch gekennzeichnet, daß das Aerosol zunehmend während seiner Zirkulation erwärmt wird.

2. Verfahren zum Bedecken einer langen Oberfläche mit einer gleichmäßigen Schicht von Partikeln nach Anspruch 1, bei dem die zu bedeckende Oberfläche über ihre Länge einen konstanten Umfang behält und das Aerosol zunehmend nach der folgenden Formel erwärmt wird :

$$T(Z) = T(0) \cdot (\ln(1\text{-}Fd \cdot Z)/Fd \cdot Z)^2 \qquad (3)$$

wobei Z die normierte Abszisse entlang der Länge der Oberfläche (Z = 0 an einem Ende der Oberfläche, an dem die Zirkulation beginnt, Z = 1 an einem Ende der Oberfläche, an dem die Zirkulation endet), T(Z) die Temperatur des Aerosols auf der Abszisse Z, T(0) die Temperatur des Aerosols auf der Abszisse Z = 0 und Fd den Partikelanteil im Aerosol bezeichnet, der vorgesehen ist, um die Oberfläche im Laufe der Zirkulation zu bedecken.

3. Anwendung des Verfahrens nach Anspruch 2, dadurch gekennzeichnet, daß die Oberfläche zu einer Vorform einer optischen Faser gehört.

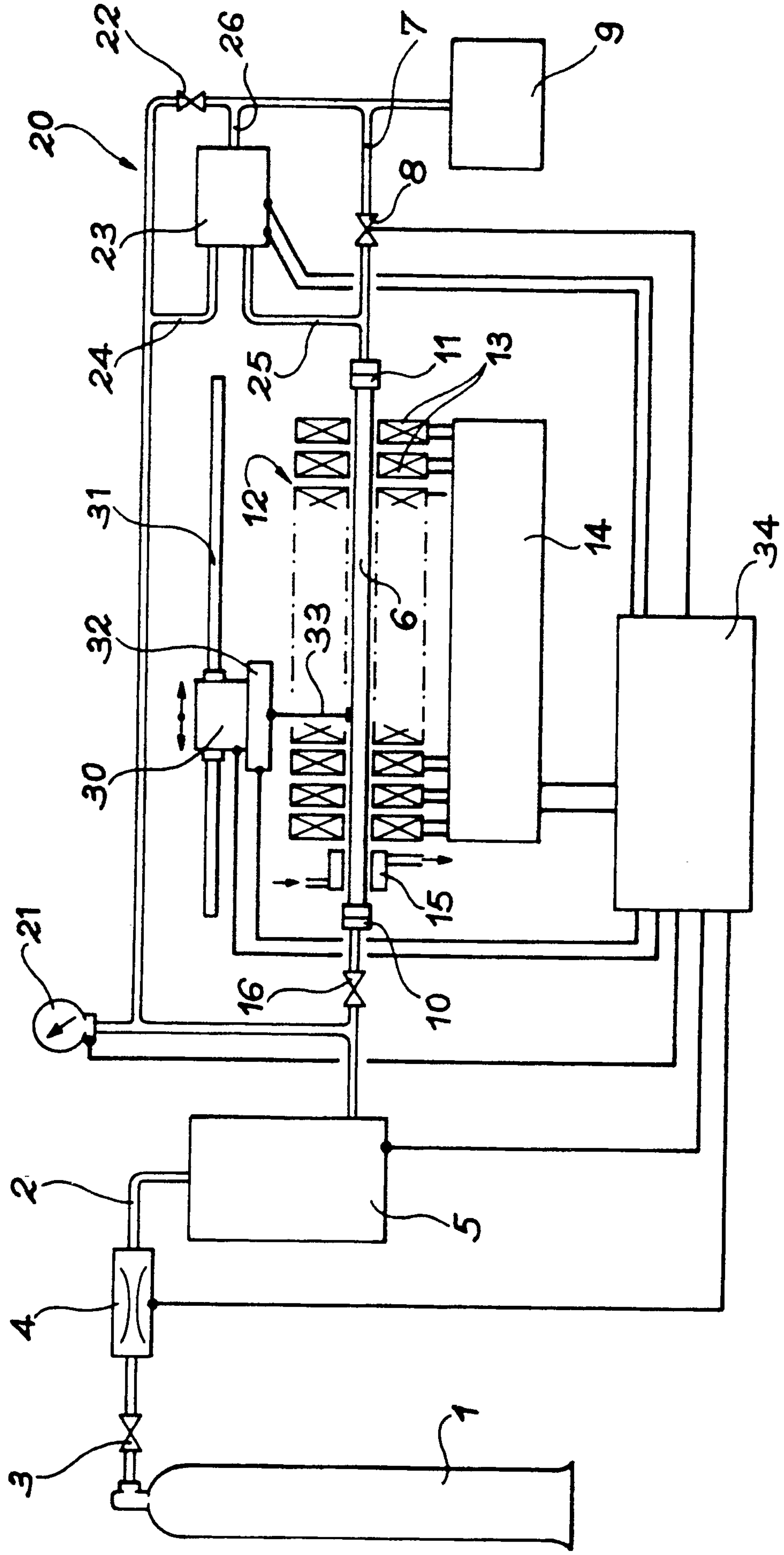
1
2
3
4
5
6
7
8
9
10
11
12
13
14
15
16
20
21
22
23
24
25
26
30
31
32
33
34